# EUROPEAN PATENT APPLICATION

(11) **EP 0 739 081 A1**
(43) Date of publication of application: **23.10.1996**
(21) Application number: 95905229.1
(22) Date of filing: 05.01.1995
(51) Int. Cl.: H02K 53/00, H02K 57/00, H02K 17/22

(54) **POWER GENERATOR**

(30) Priority: 06.01.1994 JP 11373/94
(71) Applicant: HYUN LABORATORY CO., LTD., Osaka (JP)
(72) Inventor: HYUN, Chung 4-17-402, Minamihanayashiki 4-chome, Hyogo 666 (JP)
(74) Representative: Rackham, Anthony Charles
(86) International application number: JP9500005
(87) International publication number: WO9519064

(57) **Abstract**

This invention is directed to provide a small-sized power generator which can stably supply electric energy without destroying a natural environment. The power generator comprises a primary winding for generating a travelling magnetic field and an alternating magnetic field, and a secondary winding so disposed as to cross the travelling magnetic and alternating fields.

## Description

### Technical Field

The present invention relates to generators and, more particularly, to generators working as an electric power source for supplying electric energy generated by self-excitation to, for example, a transducer, load circuit or the like.

### Background Art

The following generators are of the above known type.
(a) Hydroelectric generators in which the kinetic energy of water falling from a high position is utilized to generate electric energy.
(b) Thermoelectric generators in which the thermal energy of fuels such as coal, heavy fuel oil and combustible gas is utilized to generate electric energy.
(c) Nuclear generators in which atomic energy liberated by reactions in the process of nuclear fission is utilized to generate electric energy.
(d) Solar generators in which solar energy (i.e., sun heat or sunlight) serves to generate electric energy.
(e) Wind power generators in which wind power serves to generate electric energy.
(f) Chemical generators (i.e., batteries) in which chemical energy resulted from chemical reactions for yielding a low energy product is utilized to generate electric energy.

### Disclosure of the Invention

These generators however suffer from their inherent problems.

Building of dams necessary for hydroelectric generators destroys natural environment, and the thermoelectric generators create exhaust gas such as carbon dioxide, NOₓ and SOₓ which increases air pollution. In the case of nuclear generators, not only nuclear waste but also the risk of nuclear accidents is big public concern. The disposal of heavy metals such as mercury, nickel and cadmium used in the chemical reactions in batteries also causes serious environmental problems.

On the other hand, solar generators and wind power generators do not adversely affect natural environment, but have the disadvantage that they cannot ensure a constant supply of energy, because the number of days when the former can be used is limited and the wind power obtained in the latter is intermittent.

The present invention has been made bearing these problems in mind and one of the objects of the invention is therefore to provide novel generators which are capable of constantly supplying good amounts of electric energy without causing environmental problems and which can be made compact.

For achieving this and other objects, there is provided, according to the invention, a generator comprising a primary winding which produces a traveling magnetic field in addition to an alternating field; and a secondary winding disposed so as to be interlinked to the alternating field and the traveling magnetic field set up by the primary winding.

With such arrangement, the alternating field and traveling magnetic field, which are set up by the alternating magnetic flux produced by an energizing current flowing in the primary winding, induce electromotive forces generated by these fields to the secondary winding. The electromotive force induced into the secondary winding by the alternating field is substantially equal to the electric power which is supplied to the primary winding in order to flow an energizing current and from which some losses such as iron loss and copper loss are deducted. Thus, the electromotive forces (a force generated by the alternating field plus one generated by the traveling magnetic field), which are greater than the power supplied to the primary winding, are induced to the secondary winding so that self-excitation occurs.

The generator of the invention accordingly enables a constant supply of electric energy without damaging natural environment and also can be compactly formed.

If at least part of the electromotive forces induced in the secondary winding is provided to the primary winding, this enables self-excitation without a supply of electric energy from outside except the primary stage of starting-up.

It is to be noted that the alternating field and traveling magnetic field (including rotating magnetic field) set up by the primary winding are created by a direct current, single-phase alternating current, two-phase alternating current or polyphase alternating current including three-phase alternating current.

In a case where the traveling magnetic field is a rotating magnetic field, the electromagnetic forces induced in the secondary winding can be increased by increasing the number of alternations in the alternating field and the number of rotations in the rotating magnetic field, the alternating field and rotating magnetic field being caused by a direct current, single-phase alternating current, two-phase alternating current or polyphase alternating current including three-phase alternating current. The number of alternations and the number of rotations can be increased by shortening the cycle of intermittently flowing direct current in the case of a direct-current and by shortening the cycle of alternating current in the case of a single-phase, two-phase or polyphase (including three-phase) alternating-current. In a case where the primary winding is a polyphase (including three-phase), symmetrical coil as well as a multipole (including four-pole) coil, the electromotive forces induced in the secondary winding increase as the number of phases and the number of poles in the polyphase, multipole coil increase. Preferably, in this case, the secondary winding is a symmetrical coil having the same number of phases as that of the primary winding. This is also applicable to the case where the traveling magnetic field is not a rotating magnetic field.

The voltage and current of the electromotive forces induced in the secondary winding are preferably controlled by adjusting the turn ratio of the primary winding to the secondary winding.

It is preferable that the primary winding and secondary winding are arranged in the same magnetic circuit and that their wires are close to a core which constitutes the same magnetic circuit.

The generator of the invention can also be used as an induction motor with the following arrangements: The first arrangement is such that a rotor having a rotary shaft on the axis of the rotating magnetic field is so provided as to be rotated by the current induced by the rotating magnetic field, with the primary winding and secondary winding serving as a stator. The second arrangement is such that the primary winding and secondary winding serve as a rotor having a rotary shaft positioned on the axis of the rotating magnetic field and a stator is provided for rotating the rotor (i.e., the primary and secondary windings) by the current induced by the rotating magnetic field. In addition, the generator can be used as a linear motor by arranging such that the primary winding and secondary winding are used as the primary, and the secondary, which is moved in relation to the primary by the current induced by the traveling magnetic field, is provided.

According to the invention, self-excitation which provides a constant supply of electric energy without damaging natural environment can be achieved. Further, such self-excitation does not need a supply of electric energy from outside except the primary stage of starting-up. Therefore, the generators of the invention can be used for supplying electric energy in place of conventional generators such as hydroelectric generators, thermoelectric generators, nuclear generators, solar generators, wind power generators, and batteries. The generators of the invention are useful to all types of electric appliances, and especially to appliances in the consumer field in which a motor is driven by electric energy generated by a generator.

Other objects of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Figures 1 to 7 provide illustrations of generators according to a first embodiment of the invention;
Figure 1 is a cross-sectional perspective view of a generator;
Figure 2 is a cross section of the generator;
Figure 3(a) is a circuit diagram and Figures 3(b) and 3(c) are winding diagrams;
Figure 4 illustrates the generation of a rotating magnetic field;
Figure 5(a) is a cross section of a generator according to a first modified form of the first embodiment, which corresponds to Figure 2, and Figures 5(b) and 5(c) are winding diagrams of the first modified form, which correspond to Figures 3(b) and 3(c);
Figure 6 illustrates the generation of a rotating magnetic field according to the first modified form;
Figure 7(a) is a cross section of a generator according to a second modified form of the first embodiment, which corresponds to Figure 2, and Figures 7(b) and 7(c) are winding diagrams of the second modified form which correspond to Figures 3(b) and 3(c);
Figures 8 to 11 illustrate modifications in which the generator of the first embodiment is used as an induction motor;

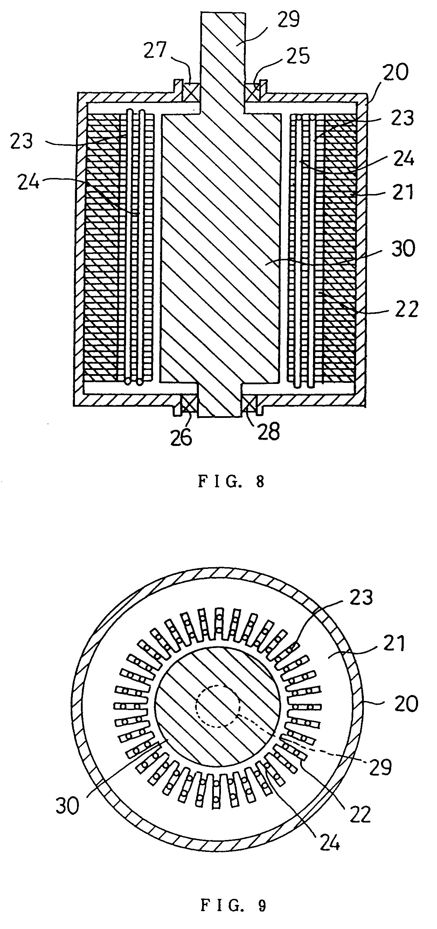

Figures 8 and 9 are a longitudinal section and cross section of a first modification, respectively;

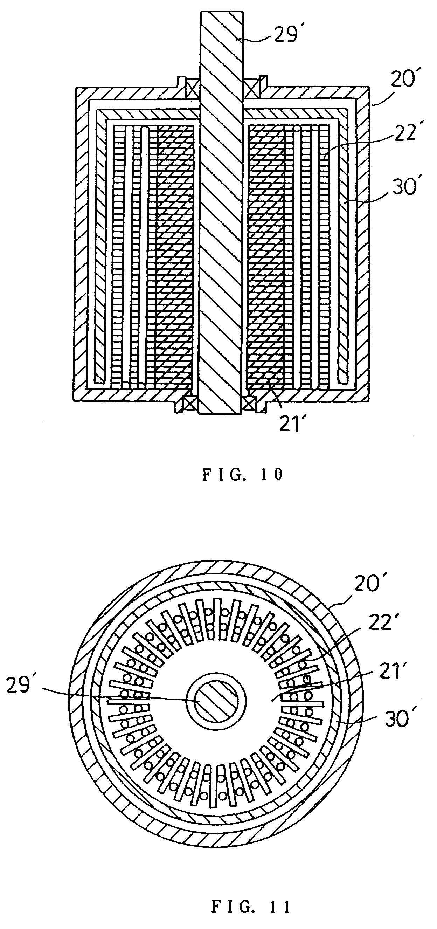

Figures 10 and 11 are a longitudinal section and cross section of a second modification, respectively;

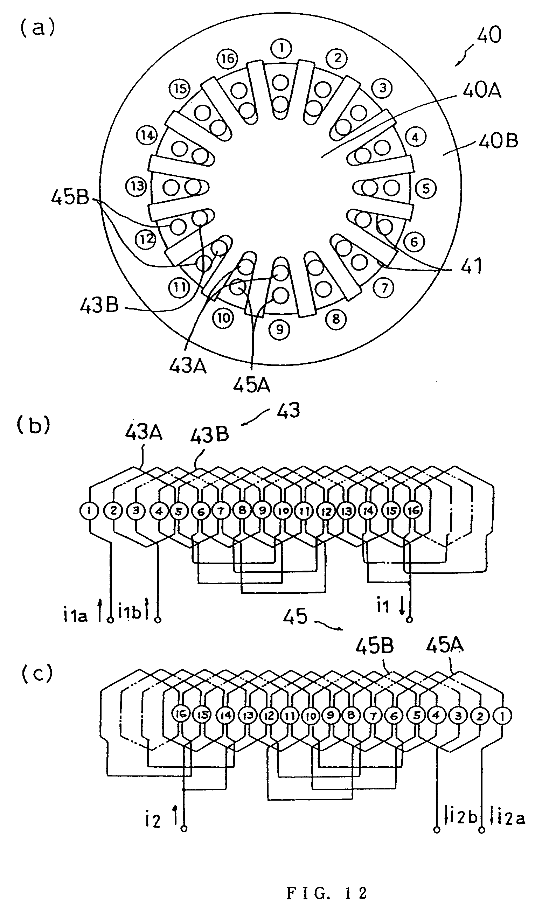

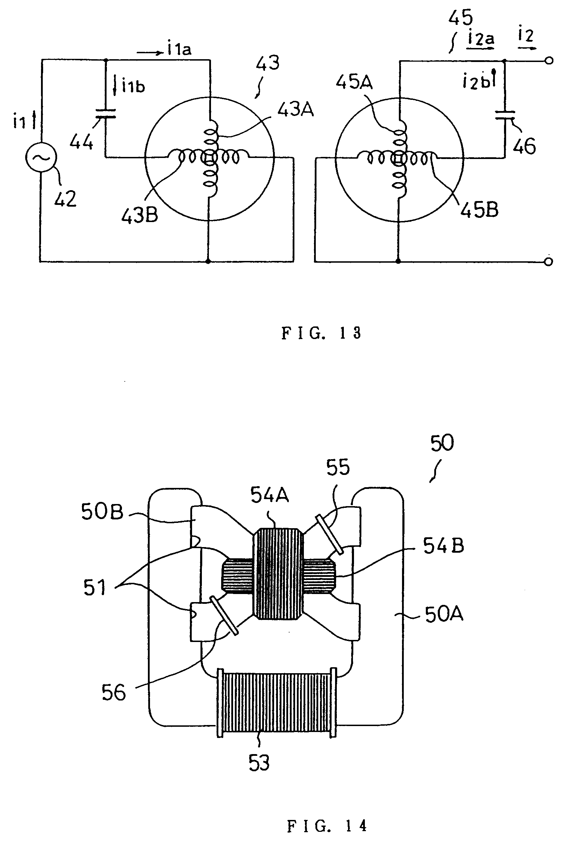

Figures 12 and 13 provide illustrations of a generator according to a second embodiment of the invention;

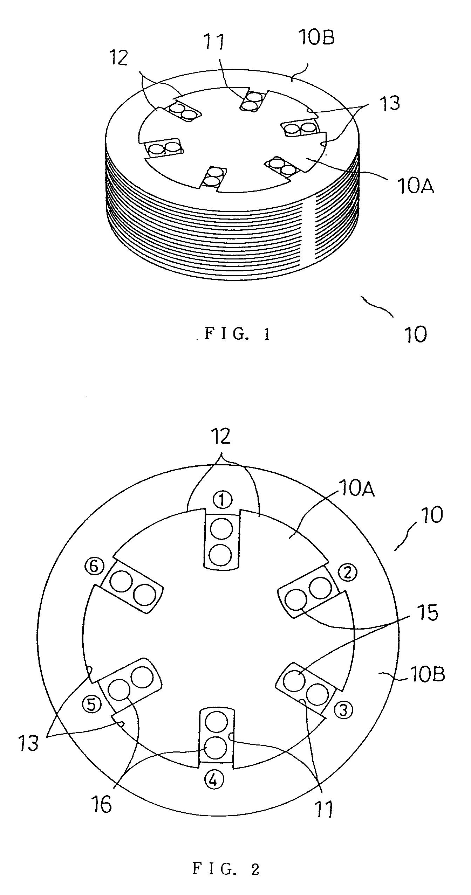

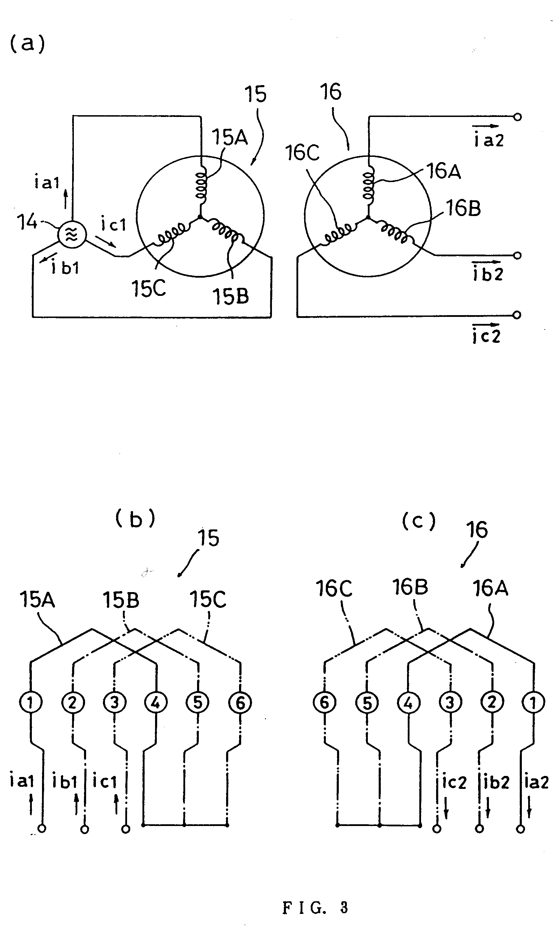

Figure 12(a) is a cross sectional view of the generator, which corresponds to Figure 2, and Figures 12(b) and 12(c) are winding diagrams which correspond to Figures 3(b) and 3(c);
Figure 13 is a circuit diagram;
Figures 14 to 17 provide illustrations of generators according to a third embodiment of the invention;
Figure 14 is an external plan view of a generator;

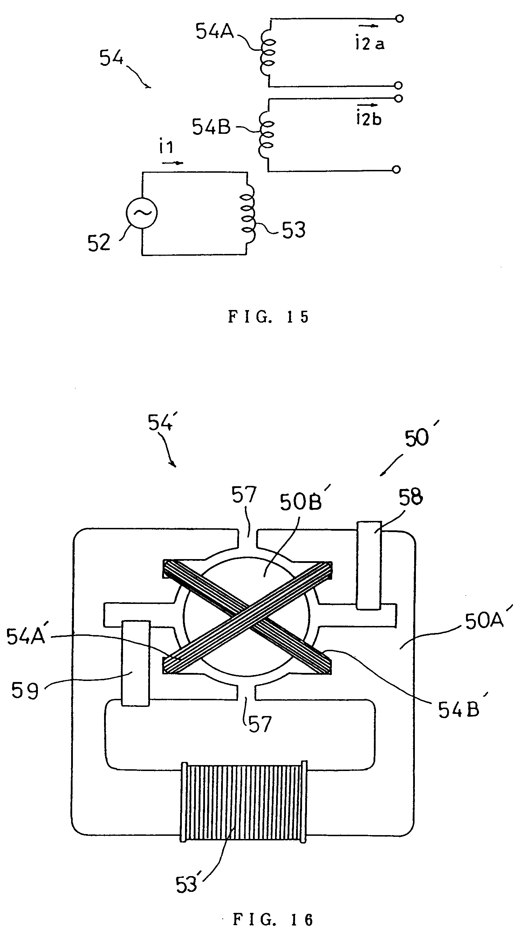

Figure 15 is a circuit diagram;
Figure 16 is an external plan view of a generator according to a first modified form of the third embodiment;

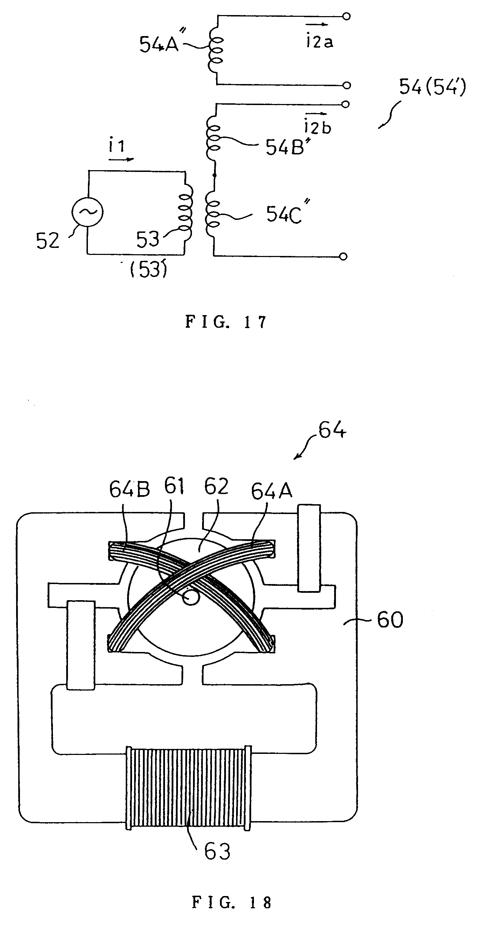

Figure 17 is a circuit diagram according to a second modified form of the third embodiment;
Figure 18 is an external plan view of a generator according to a modification in which the generator of the first modified form of the third embodiment is used as an induction motor;

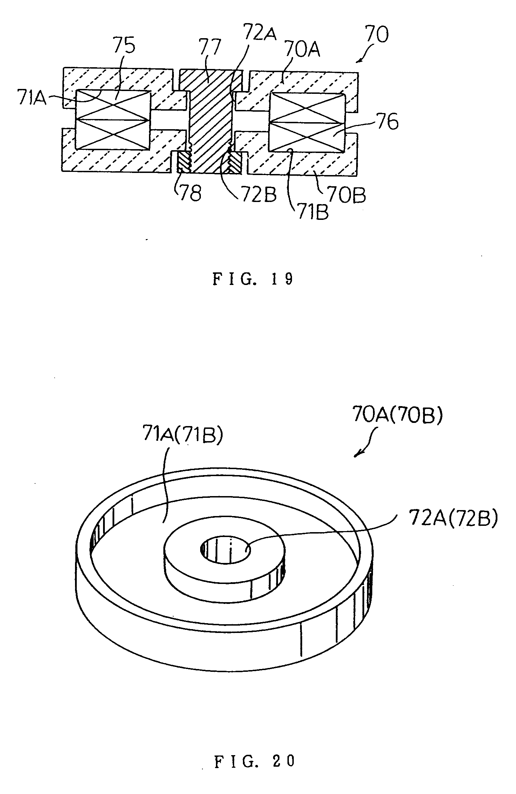

Figures 19 to 22 provide illustrations of a generator according to a forth embodiment of the invention;
Figure 19 is a longitudinal section of the generator;
Figure 20 is a perspective view of a core;

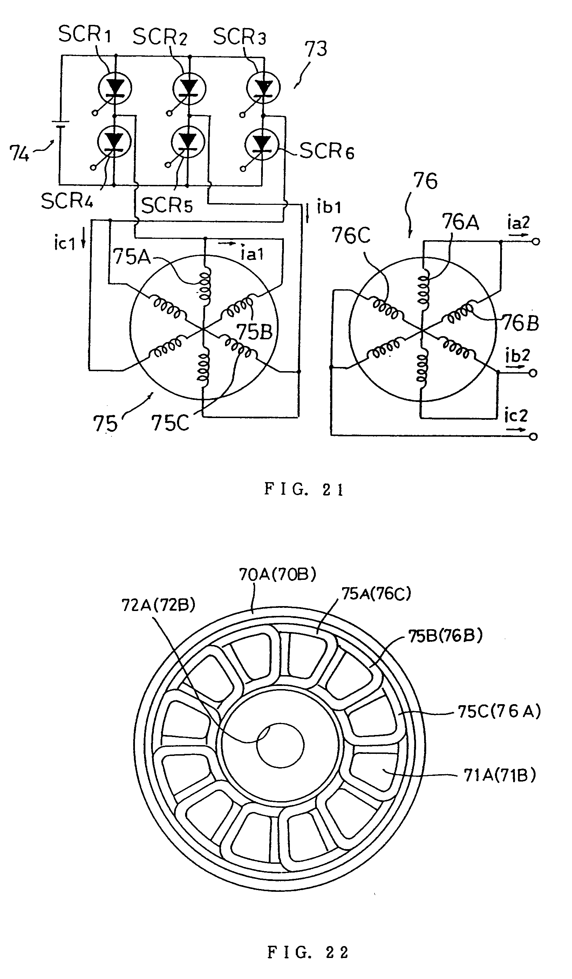

Figure 21 is a circuit diagram;
Figure 22 is a diagram showing the arrangement of windings;

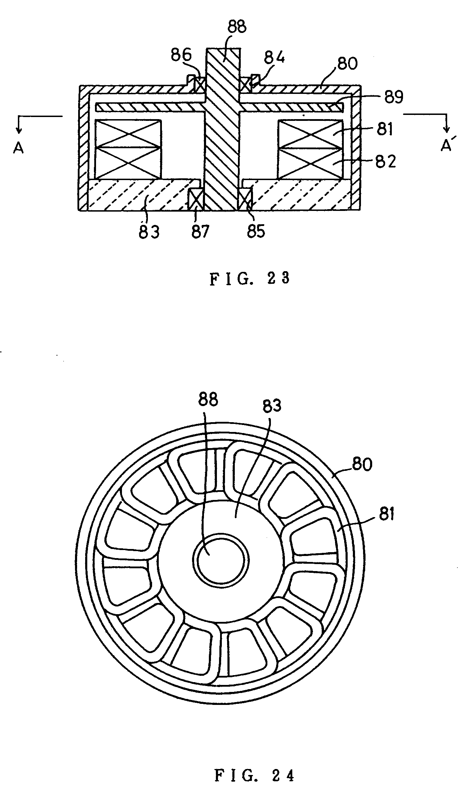

Figures 23 to 24 provide illustrations of a modification in which the generator of the forth embodiment is used as an induction motor;
Figure 23 is a longitudinal section of the generator;
Figure 24 is a cross section taken on line A-A' of Figure 23;

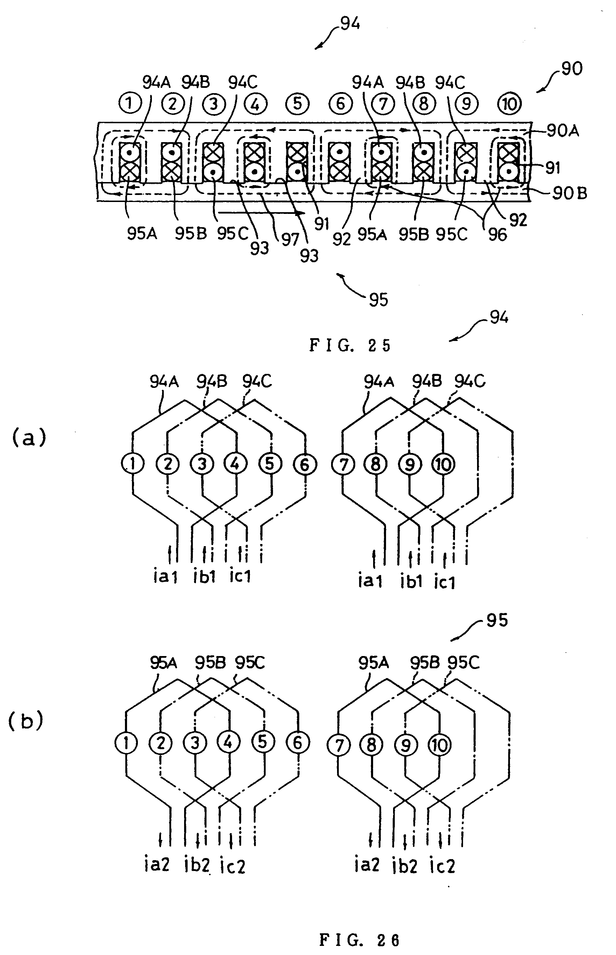

Figures 25, 26(a) and 26(b) provide illustrations of a generator according to a fifth embodiment of the invention;
Figure 25 is a cross section of the generator, which corresponds to Figure 2;
Figures 26(a) and 26(b) are winding diagrams corresponding to Figures 3(b) and 3(c); and

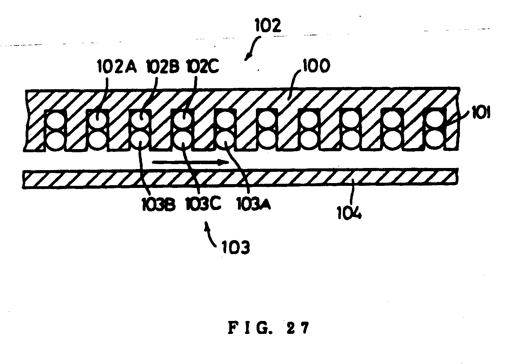

Figure 27 is a longitudinal section of a modification in which the generator of the fifth embodiment is used as a linear motor.

### Best Mode for Carrying Out the Invention

Referring now to the accompanying drawings, generators according to embodiments of the invention will be described below.

### (First Embodiment: Three-phase alternating-current, double-pole concentrated (full-pitch) coil)

Referring to Figures 1 and 2, a core 10 is composed of a cylindrical core portion 10A (which is solid) and an annular core portion 10B. The cylindrical core portion 10A is fitted in the hollow area of the annular core portion 10B such that these core portions 10A and 10B are magnetically coupled to each other. The cylindrical core portion 10A is formed by laminating circular steel plates and has six slots 11 on the outer peripheral face thereof. The slots 11, each of which extends along the axial direction of the core portion 10A, are spaced uniformly in the peripheral direction of the core portion 10A. The annular core portion 10B is also formed by laminating annular steel plates and has six cut grooves 13 on the inner peripheral face thereof. The cut grooves 13 are spaced uniformly in the peripheral direction of the core portion 10B, extending along the axial direction of the core portion 10B. Fitted in these cut grooves 13 are the leading ends of projections 12 each of which is formed between the slots 11 of the cylindrical core portion 10A. With such a structure, the core 10 is fabricated such that the cylindrical core portion 10A is fitted in the hollow area of the annular core portion 10B by inserting the projections 12 of the core portion 10A in the cut grooves 13 of the core portion 10B.

A primary winding 15, which comprises a U1-phase winding 15A, V1-phase winding 15B and W1-phase winding 15C, is fitted in the inner parts of the slots 11 of the cylindrical core portion 10A. These windings 15A, 15B and 15c are connected to a three-phase AC power supply 14 as shown in Figure 3(a) and arranged in the form of a star connection three-phase symmetrical coil as shown in Figure 3(b). A secondary winding 16, which comprises, as shown in Figure 3(a), a U2-phase winding 16A, V2-phase winding 16B and W2-phase winding 16C, is likewise fitted in the front parts of the slots 11 in the form of a star connection three-phase, symmetrical coil as shown in Figure 3(c). It should be noted that numerals ① to ⑥ in Figures 3(b), 3(c) denote the numbers of the slots.

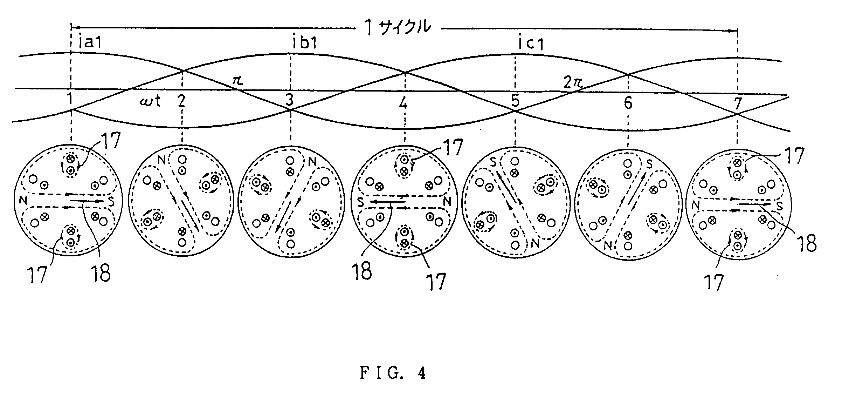

When balanced three-phase alternating currents iₐ₁, i_{b1}, i_{c1} flow as energizing current from the three-phase AC power supply 14 to the primary winding 15 (i.e., the U1-phase winding 15A, V1-phase winding 15B and W1-phase winding 15C), alternating magnetic flux produced by these balanced three-phase alternating currents iₐ₁, i_{b1} and i_{c1} sets up an alternating field 17 and a rotating magnetic field 18, as shown in Figure 4. The rotating magnetic field 18 is a kind of traveling magnetic field and rotates once clockwise during one cycle of the balanced three-phase alternating currents iₐ₁, i_{b1} and i_{c1}. The secondary winding 16 (i.e., the U2-phase winding 16A, V2-phase winding 16B and W2-phase winding 16C) is interlinked to the alternating field 17 and the rotating magnetic field 18. Electromotive forces generated by the alternating field 17 and rotating magnetic field 18 are induced in the U2, V2, W2-phase windings 16A, 16B and 16C so that balanced three-phase alternating currents iₐ₂, i_{b2} and i_{c2} flow as shown in Figures 3(a) and 3(c).

As mentioned earlier, the electromotive force generated by the alternating field 17 is added to one generated by the rotating magnetic field 18 and these forces are induced to the secondary winding 16. Besides, the electromotive force generated by the alternating field 17 and induced in the secondary winding 16 is substantially' equal to the electric power of the balanced three-phase alternating currents iₐ₁, i_{b1}, i_{c1} flowing to the primary winding 15, from which some losses such as copper loss and iron loss are deducted. As a result, the total forces induced to the secondary winding 16 are of course greater than the power supplied to the primary winding 15, which gives rise to self-excitation.

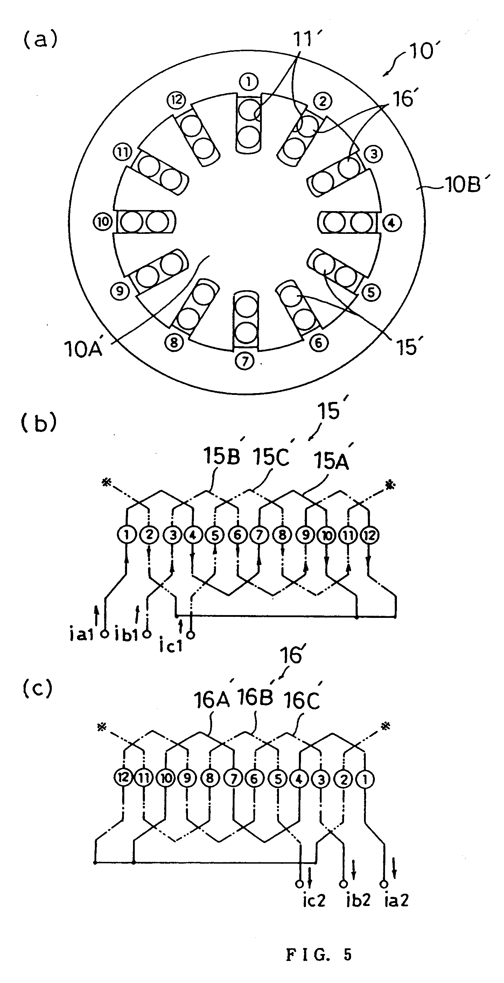

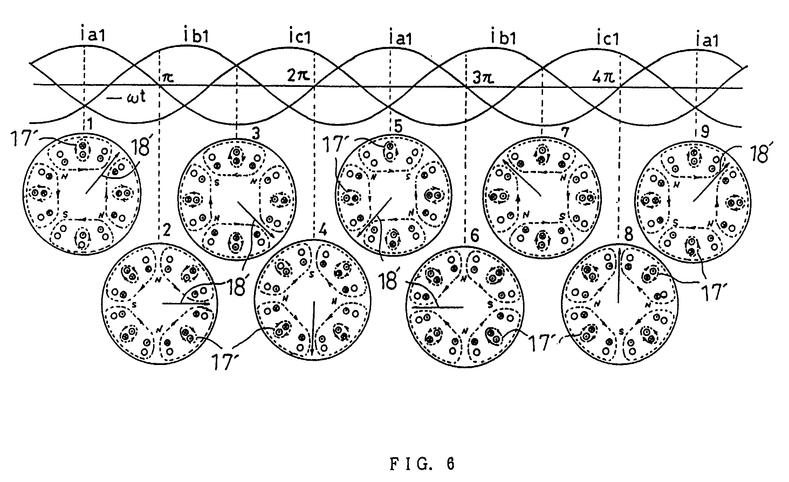

Although the first embodiment has been described in the context of a double-pole concentrated (full-pitch) coil, it is equally applicable to a four-pole concentrated (full-pitch) coil in which the number of slots 11' employed is twice that of slots 11 and there are disposed, for example, a lap-wound primary winding 15' comprising a U1-phase winding 15A', V1-phase winding 15B' and W1-phase winding 15C' and a lap-wound secondary' winding 16' comprising a U2-phase winding 16A', V2-phase winding 16B' and W2-phase winding 16C' as shown in Figures 5(a), 5(b) and 5(c). In such a coil, there is produced a four-pole rotating magnetic field 18' as shown in Figure 6, which rotates once clock-wise during two cycles of the balanced three-phase alternating currents iₐ₁, i_{b1}, i_{c1}. In the similar way, a rotating magnetic field having six poles or more is set up. As the number of poles in the rotating magnetic field increases, the electromotive forces to be induced in the secondary winding 16 (16') increase.

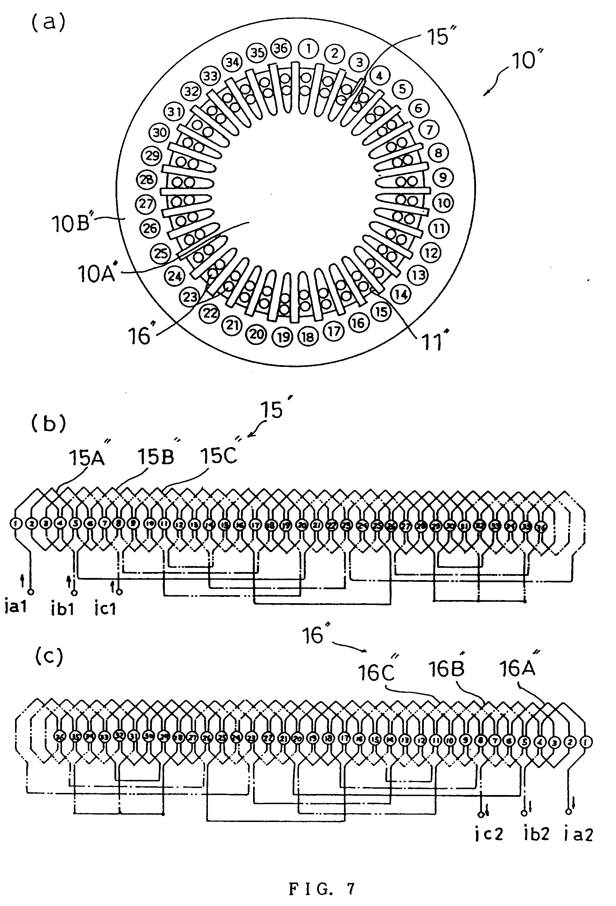

The first embodiment has been described in the context of a concentrated (full-pitch) coil, but a distributed (full-pitch) coil may be used. For example, in a case where a four-pole distributed (full-pitch) coil is used, for example, by lap wound coil, a U1-phase winding 15A'', V1-phase winding 15B'' and W1-phase winding 15C'' which constitute a primary winding 15'' and a U2-phase winding 16A'', V2-phase winding 16B'' and W2-phase winding 16C'' which constitute a secondary winding 16'' are provided in thirty-six slots 11'', as shown in Figures 7(a), 7(b) and 7(c). Other features of the construction are the same as described above.

It should be noted that numerals ① to 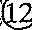 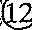 in Figures 5(a) to 5(c) and ① to 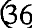 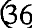 in Figures 7(a) to 7(c) designate the numbers of the slots in the same way.

### (Modification)

Next, there will be given an explanation on the case where a generator including the above-described three-phase alternating-current, four-pole distributed (full-pitch) coil is used as an induction motor.

Referring to Figures 8 and 9, there is provided a cylindrical stator frame 20 (which is hollow) having upper and lower walls. Within the stator frame 20, an annular core 21 is secured to and coaxial with the stator frame 20. Thirty-six slots 22 are formed on the inner peripheral face of the annular core 21. These slots 22 are uniformly spaced in the peripheral direction of the core 21 and extend along the axial direction of the core 21. A primary winding 23 is provided in the inner parts of the slots 22, while a secondary winding 24 is provided in the front parts of same. These windings 23, 24 are lap-wound in the form of a three-phase alternating-current, four-pole distributed (full-pitch) coil as well as a three-phase symmetrical coil.

There is provided a cylindrical conductor 30 (which is solid) at the hollow area of the annular core 21. The cylindrical conductor 30 includes a rotary shaft 29 which is positioned on the axis of the rotating magnetic field and rotatably supported at holes 25, 26 defined in the upper and lower walls of the stator frame 20, by means of bearings 27, 28. A rotating magnetic field is set up by the primary winding 23, with the annular core 21 serving as a stator and the cylindrical conductor 30 as a rotor. The rotating magnetic field induces a current to the surface of the cylindrical conductor 30 and this current causes an induction magnetic field. Electromagnetic forces generated by the rotating magnetic field and the induction magnetic field rotate the cylindrical conductor 30 serving as a rotor. As stated above, it is obvious that electromotive forces induced in the secondary winding 24 are greater than electric power supplied to the primary winding 23.

The above-described generator may be modified such that, as shown in Figures 10 and 11, an annular core 21' is provided within and coaxial with a cylindrical stator frame 20'(which is hollow), being secured to the lower wall of the stator frame 20', and an annular conductor 30' is fitted with play in the annular space between the outer peripheral face of the annular core 21' and the inner peripheral face of the stator frame 20'. In this case, the rotary shaft 29' of the annular conductor 30' is likewise positioned on the axis of the rotating magnetic field within the hollow area of the annular core 21', and other features are the same as described earlier, except that slots 22' are formed on the outer peripheral face of the annular core 21'.

Although a three-phase alternating-current, four-pole distributed (full-pitch) coil is used, it is apparent that a three-phase alternating-current, two-pole or four-pole concentrated (full-pitch) coil may be employed. In the foregoing embodiment, the annular core 21 (21') serves as a stator and the cylindrical conductor 30 (annular conductor 30') serves as a rotor, but it is also possible that an annular core 21 (21') is provided with a rotary shaft and used as a rotor, whereas the cylindrical conductor 30 (annular conductor 30') is used as a stator.

In this embodiment, the primary winding 15 (15', 15'', 23) is provided in the inner parts of the slots 11 (11', 11'', 22, 22') while the secondary winding 16 (16', 16'', 24) is provided in the front parts of them, but the primary winding 15 (15', 15'', 23) may be provided in the front parts, with the secondary winding 16 (16', 16'', 24) being in the inner parts. It is also possible to dispose these windings at the inner and front parts irrespective of primary or secondary. Although a star-connection, three-phase, symmetrical coil is employed in this embodiment, a Δ-connection, three-phase, symmetrical coil may be used. The coil employed in this embodiment may be a wave coil or chain coil, instead of a lap coil. Further, a full-pitch coil may be replaced with a short-pitch coil. In short, the first embodiment is applicable to all types of winding methods.

While the core 10 (10', 10'', 21, 21') is formed by laminating steel plates in this embodiment, it may be formed from wound steel plates, a lump of steel, or burnt, hardened ferrite. In short, any materials may be used as far as they are magnetic substances.

### (Second Embodiment: Single-phase alternating-current, phase-splitting capacitor, four-pole distributed (full-pitch) coil)

Referring to Figures 12(a), 12(b) and 12(c), a core 40 is composed of a cylindrical core portion 40A (which is solid) and an annular core portion 40B which is magnetically coupled to the core portion 40A and has a hollow area in which the core portion 40A is fitted, like the first embodiment.

Sixteen slots 41, each of which extends along the axial direction of the cylindrical core portion 40A, are spaced uniformly on the outer peripheral face of the core portion 40A in the peripheral direction thereof. A primary winding 43 is provided and fitted in the inner parts of the slots 41. As shown in Figure 13, the primary winding 43 is connected to a single-phase AC power supply 42 and comprises a main winding (single-phase winding) 43A and an auxiliary winding 43B having a capacitor 44, to form a two-phase, symmetrical, lap, full-pitch coil. The main winding 43A and auxiliary winding 43B are so arranged that they differ in phase by 90 electrical degrees. Fitted in the front parts of the slots 41 is a secondary winding 45 shown in Figure 13. Similarly, the secondary winding 45 comprises a main winding (single-phase winding) 45A and an auxiliary winding 45B having a capacitor 46 to form a two-phase, symmetrical, lap, full-pitch coil, and these windings 45A and 45B are so arranged that they differ in phase by 90 electrical degrees.

When a single-phase alternating current i₁ flows as energizing current from the single-phase AC power supply 42 to the primary winding 43, alternating magnetic flux produced by currents i₁ₐ, i_{1b} flowing the main winding 43A and auxiliary winding 43B sets up an alternating field, and owing to the alternating field and the phase difference between the currents i₁ₐ and i_{1b} flowing between the main winding 43A and the auxiliary winding 43B, the rotating magnetic field is produced. This rotating magnetic field rotates once during one cycle of the single-phase current i₁. The alternating field and rotating magnetic field allow the main winding (single-phase winding) 45A and auxiliary winding 45B of the secondary winding 45 to be interlinked to each other, so that electromotive forces are induced and a single-phase alternating current i₂ flows. In this way, electromotive forces greater than the power supplied to the primary winding 43 are induced in the secondary winding 45, like the first embodiment.

In the second embodiment, the primary winding 43 may be provided in the front parts of slots 41 while the secondary winding 45 may be provided in the inner parts of them, or these windings 43, 45 may be disposed at the inner and front parts irrespective of primary or secondary, just as in the case of the first embodiment. Although a lap coil is employed in this embodiment, a wave coil or chain coil may be used. Further, a short-pitch coil may be used instead of a full-pitch coil. In short, the second embodiment is applicable to all types of winding methods. In addition, like the first embodiment, the core 40 may be formed by laminating or winding steel plates, or made from a lump of steel or burnt, hardened ferrite. In short, any materials may be used for the core 40 as far as they are magnetic substances.

The single-phase alternating-current generator of the phase-splitting capacitor type may be used as an induction motor, by employing the same construction as explained in the modification of the first embodiment.

It is to be understood that, in the case of a generator having no capacitor, an alternating field and a rotating magnetic field can be set up just like the case of the single-phase alternating-current, phase-splitting capacitor generator and the electromotive forces induced in the secondary winding can be made greater than the power supplied to the primary winding, by providing a difference in reactance between the primary winding and secondary winding, or by flowing two-phase alternating current having a phase angle of 90°. Also, a generator having no capacitor can be used as an induction motor, with such arrangement.

### (Third Embodiment: Single-phase, double-pole, alternating-current winding of the shading coil type)

Referring to Figure 14, a core 50 is composed of a U-shaped core portion 50A and a X-shaped core portion 50B. The X-shaped core portion 50B is magnetically coupled to the U-shaped core portion 50A, being fitted in the hollow area which is defined by both arm parts of the U-shaped core portion A. The core portions 50A and 50B are formed by laminating U-shaped and X-shaped steel plates respectively. The U-shaped core portion 50A has two cut grooves 51 inside each arm part to accommodate the leading ends of the X-shaped core portion 50B. The core 50 is so fabricated that the X-shaped core portion 50B is inserted in the hollow area between the arm parts of the U-shaped core portion 50A, by fitting the leading ends of the core portion 50B in the cut grooves 51 of the core portion 50A.

The wire of a primary winding 53 is coiled around the middle part of the U-shaped core portion 50A and the primary winding 53 is connected to a single-phase AC power supply 52 as shown in Figure 15.

A secondary winding 54 comprises a first winding 54A and second winding 54B as shown in Figure 15 and these windings 54A and 54B are coiled around the X-shaped core portion 50B so as to cross each other. As shown in Figure 14, the X-shaped core portion 50B is provided with a pair of shading coils 55, 56 made from for example copper, so that a rotating magnetic field which rotates counter-clockwise in Figure 15 is set up in the X-shaped core portion 50B.

When a single-phase alternating current i₁ flows from the single-phase AC power supply 52 to the primary winding 53, alternating magnetic flux produced by the current i₁ sets up an alternating field, and owing to this alternating field and the function of the pair of shading coils 55, 56 to delay the magnetic flux, a rotating magnetic field which rotates once during one cycle of the single-phase alternating current i₁ is set up. The alternating field and rotating magnetic field allow the first and second windings 54A and 54B of the secondary winding 54 to be interlinked to each other, so that electromotive forces are induced and single-phase alternating currents i₂ₐ, i_{2b} flow. In this way, electromotive forces greater than the power supplied to the primary winding 53 are induced in the secondary winding 54, like the first and second embodiments.

Although the third embodiment has been described in the context of the core 50 comprising the U-shaped core portion 50A and X-shaped core portion 50B, it is possible to employ a core 50' shown in Figure 16 which comprises a modified U-shaped core portion 50A' and a circular (cylindrical) core portion 50B' (which is solid). The circular (cylindrical) core portion 50B' is inserted with play in a hollow area defined by the arm parts of the modified U-shaped core portion 50A'. These core portions 50A' and 50B' are formed by laminating modified U-shaped steel plates and circular steel plates respectively. Like the third embodiment, a primary winding 53' is coiled around the middle part of the modified U-shaped core portion 50A'. A secondary winding 54' comprising a first winding 54A' and second winding 54B' is coiled around the circular (cylindrical) core portion 50B' in such a manner that the first and second windings 54A' and 54B' cross each other. Note that numeral 57 designates a clearance and numerals 58, 59 shading coils.

The secondary winding 54 (54') may be modified as shown in Figure 17 to comprise first to third windings 54C'', 54A'' and 54B''. The first winding 54C'' is coiled over or under the primary winding 53 (53') which is coiled around the middle part of the U-shaped core portion 50A (modified U-shaped core portion 50A'). The second and third windings 54A'' and 54B'' are coiled around the X-shaped core portion 50B (circular (cylindrical) core portion 50B') so as to cross each other, just like the first and second windings 54A (54A'), 54B (54B'). Such arrangement enables it to effectively induce the electromotive force in the first winding 54C'', the electromotive force being produced by the alternating field set up by the primary winding 53 (53').

### (Modification)

Next, there will be given an explanation on the case where the generator having the aforesaid core 50' comprised of the modified U-shaped core portion 50A' and the circular (cylindrical) core portion 50B' is used as an induction motor.

Referring to Figure 18, a core 60 is formed by laminating modified U-shaped steel plates as already described. Instead of the aforesaid circular (cylindrical) core portion 50B', a cylindrical conductor 62 (which is solid) is inserted with play in the hollow area defined by both arm parts of the modified U-shaped core 60. The cylindrical conductor 62 includes and is coaxial with a rotary shaft 61 which extends in a direction perpendicular to the plane of the drawing, being rotatably supported by e.g., bearings (not shown) at both ends thereof. A primary winding 63 is coiled around the middle part of the modified U-shaped core 60, while a secondary winding 64 comprised of first and second windings 64A, 64B is coiled around the cylindrical conductor 62 such that the windings 64A, 64B cross each other and the conductor 62 can pivot. This modification is the same as the above-described modified form in that a rotating magnetic field is set up by the primary winding 63, inducing a current in the surface of the conductor 62 to set up an induction magnetic field and in that the cylindrical conductor 62 is rotated as a rotor by electromagnetic forces produced by the rotating magnetic field and induction magnetic field, with the core 60 serving as a stator. In the modification, the electromotive forces induced in the secondary winding 64 are greater than the power supplied to the primary winding 63, as the above mentioned. It is also possible that as shown in Figure 17, the secondary winding 64 is composed of first to third windings and the first winding is coiled over or under the primary winding 63 while the second and third windings being coiled around the cylindrical conductor 62 as to intersect just as in the case of the first and second windings 64A, 64B. With such arrangement, the electromotive force produced by the alternating field set up by the primary winding 63 can be effectively induced to the first winding. Other features of the construction are the same as described earlier.

Although the core 50 (50', 60) is formed by laminating steel plates, it may be formed from a lamp of steel, burnt, hardened ferrite, or any other materials as far as they are magnetic substances, like the first and second embodiments.

### (Forth Embodiment: Direct-current, double-pole concentrated (full-pitch) coil)

Referring to Figure 19, a core 70 is composed of two disk-shaped core portions 70A, 70B formed, for example, by burning and hardening ferrite. As shown in Figure 20, each of the disk-shaped core portions 70A, 70B has an annular groove 71A (71B) and a through hole 72A (72B) at one face thereof. The annular groove 71A (71B) is coaxial with the core portion 70A (70B) and the through hole 72A (72B) is defined at the axial part of the core portion 70A (70B). A primary winding 75 comprising three windings 75A, 75B, 75C is provided in the form of a lap, full-pitch coil in the annular groove 71A of the disk-shaped core portion 70A as shown in Fig. 22. The primary winding 75 is connected to a DC power supply 74 through a switch circuit 73 comprised of six SCRs₁₋₆ as shown in Figure 21 and fixedly bonded to the annular groove 71A by resin or similar material. In the annular groove 71B of the other disk-shaped core portion 70B, a secondary winding 76 comprising three windings 76A, 76B, 76C (see Figure 21) is provided in the form of a lap, full-pitch coil in the same way, as shown in Figure 22. The secondary winding 76 is also fixedly bonded to the annular groove 71B by resin or the like. The disk-shaped core portions 70A, 70B are arranged in opposing relationship so that the primary and secondary windings 75, 76 are sandwiched by the core portions 70A, 70B, with the windings 75A, 75B, 75C being superposed on the windings 76A, 76B, 76C respectively. A bolt 77 is inserted in the through holes 72A, 72B, being tightened by a nut 78, and the core 70 is thus fabricated.

When direct currents iₐ₁, i_{b1}, i_{c1} flow as energizing current in intermittent succession from the DC power supply 74 to the three windings 75A, 75B, 75C of the primary' winding 75 by turning on and off the SCRs₁₋₆ in the switch circuit 73, these direct currents iₐ₁, i_{b1,} i_{c1} produce alternating magnetic flux, thereby setting up an alternating field and a rotating magnetic field which rotates once during one cycle of the successively flowing direct currents iₐ₁, i_{b1,} i_{c1}. The windings 76A, 76B, 76C of the secondary winding 76 are interlinked to these alternating field and rotating magnetic field so that electromotive forces differing in phase and generated by the alternating field and rotating magnetic field are induced in the windings 76A, 76B, 76C, and thus direct currents iₐ₂, i_{b2}, i_{c2} flow intermittently. With such arrangement, electromotive forces greater than the power supplied to the primary winding 75 are induced in the secondary winding 76.

### (Modification)

Next, there will be given an explanation on the case where a generator including the aforesaid direct-current, double-pole concentrated (full-pitch) coil is used as an induction motor.

Referring to Figures 23 and 24, a circular lower wall portion 83 is fitted in the lower end of a cylindrical stator frame 80 (which is hollow) having an upper wall. This circular lower wall portion 83 serves as a core and is formed from burnt, hardened ferrite. Fixed to the upper face of the circular lower wall portion 83 are a primary winding 81 and secondary winding 82 which are arranged in annular form as described earlier and laminated vertically, up and down. The primary winding 81 and secondary winding 82 are composed of three windings respectively and arranged in the form of a direct-current, double-pole concentrated coil as the above mentioned.

A hole 84 is defined in the upper wall of the stator frame 80 and a hole 85 is defined in the circular lower wall portion 83. Between the upper wall of the stator frame 80 and the primary winding 81 is provided a disk-shaped conductor 89 having a rotary shaft 88 on the axis of the rotating magnetic field. The rotary shaft 88 is positioned in the hollow area defined by the primary winding 81 and secondary winding 82 arranged doughnut-like, being rotatably supported at the holes 84, 85 with the help of bearings 86, 87. The primary winding 81 sets up a rotating magnetic field, causing a current which flows on the surface of the disk-shaped conductor 89. Thus, the disk-shaped conductor 89 is rotated as a rotor by this current, with the primary and secondary windings 81, 82 serving as a stator and electromotive forces greater than the power supplied to the primary winding 81 are induced in the secondary winding 82, as described earlier.

Although the primary winding 81 and secondary winding 82 are used as a stator while the disk-shaped conductor 89 as a rotor in the embodiment, the primary and secondary windings 81, 82 may be used as a rotor and the disk-shaped conductor 89 may be used as a stator.

Although the primary winding 75 (81) is placed above the secondary winding 76 (82) in the embodiment, it is also possible to place the secondary winding 76 (82) above the primary winding 75 (81). The lap coil used in this embodiment may be replaced by a wave coil or chain coil and a short-pitch coil may be employed instead of the full-pitch coil. In short, the forth embodiment is applicable to all types of winding methods including distributed coils.

While the core 70 and circular lower wall portion 83 are formed from burnt, hardened ferrite in the embodiment, any materials may be used as far as they are magnetic substances.

### (Fifth Embodiment: Three-phase alternating current, single-phase (full-pitch) coil)

Referring to Figure 25, a core 90 comprises a first core portion 90A at the upper side thereof and a second core portion 90B at the underside thereof, these portions 90A, 90B being magnetically coupled to each other. The first core portion 90A has slots 91 which are uniformly spaced in the lateral direction, each extending in a direction perpendicular to the plane of the drawing at the underside thereof. The second core portion 90B has cut grooves 93 for accommodating the leading ends of projections 92 each of which is positioned between the slots 91 of the first core portion 90A. The cut grooves 93 are uniformly spaced in the lateral direction, extending in a direction perpendicular to the plane of the drawing at the upper side thereof. The first and second core portions 90A, 90B are formed, for example, from laminated steel plates or burnt, hardened ferrite. The projections 92 of the first core portion 90A are fitted in the cut grooves 93 of the second core portion 90B, thus fabricating the core 90.

A primary winding 94 comprises a U1-phase winding 94A, V1-phase winding 94B and W1-phase winding 94C and these windings 94A, 94B, 94C are inserted in sequential order in the inner parts of the slots 91 of the first core portion 90A, as shown in Figure 26(a). The primary winding 94 is connected to a three-phase AC power supply (not shown). A secondary winding 95 comprises a U2-phase winding 95A, V2-phase winding 95B and W2-phase winding 95C and these windings 95a, 95B, 95C are likewise inserted in sequential order in the front parts of the slots 91, as shown in Figure 26(b). Note that numerals ① to 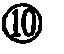 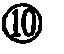 in Figures 25, 26(a), 26(b) designate the numbers of the slots.

When balanced three-phase alternating currents iₐ₁, i_{b1}, i_{c1} flow as energizing current from the three-phase AC power supply (not shown) to the U1-phase winding 94A, V1-phase winding 94B and W1-phase winding 94C of the primary winding 94, these balanced three-phase currents iₐ₁, i_{b1}, i_{c1} produce alternating magnetic flux, thereby setting up an alternating field 96 (see Figure 25) and a traveling magnetic field 97 which moves in the direction indicated by arrow in Figure 25. It should be noted that the alternating field 96 when the flowing amount of the current iₐ₁ is greater the other currents i_{b1}, i_{c1} is shown in Figure 25. The alternating field 96 and traveling magnetic field 97 cause electromotive forces to be induced in the U2-phase winding 95A, V2-phase winding 95B and W2-phase winding 95C of the secondary winding 95, the electromotive forces being greater than the power supplied to the primary winding 94, like the cases described earlier. Thus, balanced three-phase alternating currents iₐ₂, i_{b2}, i_{c2} flow as shown in Figure 26(b).

### (Modification)

Next, there will be given an explanation on the case where a generator including the aforesaid three-phase alternating current, single-phase (full-pitch) coil is used as an induction motor or linear motor.

Referring to Figure 27, a core 100 formed from laminated steel plates or burnt, hardened ferrite is provided as the primary. The core 100 has, at the underside thereof, slots 101 uniformly spaced in a lateral direction. A primary winding 102 comprises a U1-phase winding 102A, V1-phase winding 102B and W1-phase winding 102C, and these windings 102A, 102B, 102C are fitted in sequential order in the inner parts of the slots 101. Similarly, the secondary winding 103 comprises a U2-phase winding 103A, V2-phase winding 103B and W2-phase winding 103C, and these windings 103A, 103B, 103C are fitted in sequential order in the front parts of the slots 101.

Disposed under the core 100 is a conductive board 104 which extends along the core 100 and functions as the secondary.

The core 100 serves as a fixed part while the conductive board 104 serving as a movable part, so that a traveling magnetic field, which is set up by the primary winding 102 and moves in the direction indicated by arrow in Figure 27, causes a current to be induced in the surface of the conductive board 104. This current produces an induction magnetic field. These magnetic fields give rise to electromagnetic forces which allow the conductive board 104 to move in the direction indicated by arrow. Like the cases described earlier, the electromotive forces induced in the secondary winding 103 are greater than the power supplied to the primary winding 102.

Although the core 100 serves as a fixed part while the conductive board 104 serving as a movable part, it is possible to design the core 100 to be movable while the conductive board 104 being fixed.

It is obvious that the fifth embodiment is not limited to a three-phase alternating current, single-phase full-pitch coil, but applicable to all winding methods including two-phase coils, lap coils, wave coils, chain coils and short-pitch coils.

In this embodiment, the primary winding 94 (102) is disposed in the inner parts of the slots 91 (101) and the secondary winding 95 (103) is disposed in the front parts. However, the primary winding 94 (102) may be in the front parts while the secondary winding 95 (103) may be in the inner part. Another alternative is such that they may be disposed in the inner and front parts, irrespective of primary or secondary.

While the core 90 (100) is formed from laminated steel plates or burnt, hardened ferrite in the embodiment, it may be formed from any materials as far as they are magnetic substances.

In the foregoing embodiments and modifications, by providing at least part of the electromotive forces induced in the secondary winding to the primary winding, self-excitation can be achieved without a supply of electric energy from outside except the primary stage of starting-up. This also enables it to use the generators disclosed in these embodiments as an induction motor or linear motor. In addition, it is needless to say that as the number of alternations in the alternating field and the number of rotations in the rotating magnetic field increase by shortening the cycle of a current flowing in the primary winding, or the number of phases in a polyphase coil increase, the electromotive forces induced in the secondary winding can be increased. It will be noted that a shifting magnetic field which is movable forwardly and reversely can be employed as a traveling magnetic field, in addition to the above-described rotating magnetic field.

Further, the voltage and current of the electromotive forces induces in the secondary winding may be controlled by adjusting the turn ratio of the primary winding to the secondary winding.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A generator comprising a primary winding which produces a traveling magnetic field in addition to an alternating field; and a secondary winding disposed so as to be interlinked to the alternating field and the traveling magnetic field set up by the primary winding.

2. A generator as claimed in Claim 1, wherein at least part of electromotive forces induced in the secondary winding is provided to the primary winding.

3. A generator as claimed in Claim 1 or 2, wherein the alternating field and traveling magnetic field set up by the primary winding are created by a direct current, single-phase alternating current, two-phase alternating current or polyphase alternating current including three-phase alternating current.

4. A generator as claimed in Claim 1 or 2, wherein the primary winding and the secondary winding are arranged in the same magnetic circuit.

5. A generator as claimed in Claim 1 or 2, wherein the voltage and current of the electromotive forces induced in the secondary winding are controlled by adjusting the turn ratio of the primary winding to the secondary winding.

6. A generator as claimed in Claim 1 or 2, wherein the primary winding and secondary winding are used as a primary, and a secondary, which is moved in relation to the primary by a current induced by the traveling magnetic field, is provided.

7. A generator as claimed in Claim 1, wherein the traveling magnetic field is a rotating magnetic field.

8. A generator as claimed in Claim 7, wherein the alternating field and rotating magnetic field set up by the primary winding are produced by a direct current, single-phase alternating current, two-phase alternating current or polyphase alternating current including three-phase alternating current.

9. A generator as claimed in Claim 7, wherein the primary winding is a polyphase symmetrical coil including a three-phase symmetrical coil as well as a multipole coil including four-pole coil.

10. A generator as claimed in Claim 8, wherein a large number of alternations take place in the alternating field and a large number of rotations take place in the rotating magnetic field, the alternating field and rotating magnetic field being produced by a direct current, single-phase alternating current, two-phase alternating current, or polyphase alternating current including three-phase alternating current.

11. A generator as claimed in Claim 9, wherein the secondary winding is a symmetrical coil having the same number of phases as that of the primary winding.

12. A generator as claimed in Claim 9, wherein the number of alternations in the alternating field and the number of rotations in the rotating magnetic field are increased by shortening the cycle of the polyphase alternating current.

13. A generator as claimed in Claim 11, wherein the primary winding and the secondary winding are arranged in the same magnetic circuit.

14. A generator as claimed in Claim 13, wherein the wire of the primary winding and that of the secondary winding are coiled in the neighborhood of a core which constitutes the same magnetic circuit.

15. A generator as claimed in any one of Claims 7 to 14, wherein a rotor having a rotary shaft on the axis of the rotating magnetic field is so provided as to be rotated by a current induced by the rotating magnetic field, with the primary winding and secondary winding serving as a stator.

16. A generator as claimed in any one of Claims 7 to 14, wherein the primary winding and secondary winding serve as a rotor having a rotary shaft on the axis of the rotating magnetic field and a stator is provided for rotating the rotor by a current induced by the rotating magnetic field.
